# EUROPEAN PATENT APPLICATION

(11) **EP 1 435 727 A1**
(43) Date of publication of application: **07.07.2004**
(21) Application number: 02772987.0
(22) Date of filing: 10.10.2002
(51) Int. Cl.: H04N 1/19

(54) **METHOD FOR CONTROLLING IMAGE READER**

(30) Priority: 10.10.2001 JP 2001312850
(71) Applicant: PFU LIMITED, Kahoku-gun Ishikawa 929-1192 (JP)
(72) Inventor: KOSAKA, Kiyoto, PFU LIMITED, Kahoku-gun, Ishikawa 929-1192 (JP)
(74) Representative: Reichel, Wolfgang, Dipl.-Ing.
(86) International application number: PCT/JP2002/010519
(87) International publication number: WO 2003/034708

(57) **Abstract**

A method for controlling an image reading apparatus (100) performs an auto focus process for adjusting the focus on a medium (300) surface and a reading process for reading an image on the medium (300) at the focus adjusted by the auto focus process. During the auto focus process, a difference processing unit (5) calculates differences between adjacent picture elements in image data read from the medium (300), an averaging processing unit (6) averages the differences, and a midpoint processing unit (7) slices characteristic data obtained from the averaging processing into a plurality of region to determine the midpoint in each region, so that the focal point can be calculated.

## Description

### Technical Field

This invention relates to a method for controlling an image reading apparatus, and more particularly to a method for controlling an image reading apparatus which has an auto focus function to provide a high resolution.

### Background Art

At the time of shipping, an image reading apparatus is typically adjusted to focus on a platen glass surface on which a medium such as a cut-sheet or transparency-film document is placed (or the surface on which a medium is carried) for its reading processing. Therefore, no problem arises during a reading processing in a case that the medium placed thereon by the user is kept in close contact with the platen glass surface. However, when the medium is placed on the platen glass, the medium surface with an image drawn thereon is actually somewhat floating over the platen glass surface mainly due to its deflection or distortion.

Thus, a scanner or other image reading apparatus may have an auto focus function to obtain a higher resolution. Due to the auto focus function, the focus which has been adjusted on the platen glass surface is readjusted on the image-bearing surface of medium (which was out of focus). This may provide a more accurate, that is, higher-resolution image (image data).

As described above, the auto focus function is effective in obtaining a high resolution. However, it may fail to detect a correct focal point for various reasons. In such a case, a high resolution cannot be provided. A possible cause may be that a prior process, in which only a lens is moved while a CCD is fixed, used to obtain a high resolution calculate a "position" which can achieve the highest resolution with respect to an output from the CCD (hereinafter referred to as a focus position), for example.

When, for example, a medium to be read is a document of low contrast, a relatively larger noise component may be produced. Thus, variations cannot be avoided in calculated focuspositions. Alternatively, if the medium is, for example, a transparency-film document, any dust or contamination adherent to the transparency-film document or its chart surface (the document cover surface) may produce a (large) noise. Therefore, the focus may be adjusted not on the image-bearing, transparency-film document surface but on the dust as described above.

It is an object of the present invention to provide a method for controlling an image reading apparatus, which can provide more accurate focusing to provide a higher resolution during an auto focus process.

It is another object of the present invention to provide a method for controlling an image reading apparatus, which can perform a gamma correction processing to provide a higher resolution during an auto focus process.

It is still another object of the present invention to provide a method for controlling an image reading apparatus, which can performa shading compensation processing to provide a higher resolution during an auto focus process.

### Disclosure of the Invention

A method for controlling an image reading apparatus of the present invention is a method which includes performing an auto focus process to adjust a focus on a surface of a medium, and performing a reading process to read an image on the medium at the focus adjusted by the auto focus process. And, the auto focus process further includes performing a shading compensation process on image data read from the medium, performing a gamma correction process on the shading-compensated image data, calculating differences between adjacent picture elements in the gamma-corrected image data, averaging the differences, and obtaining characteristic data from the averaging process is sliced into a plurality of region and determining the midpoint in each of the plurality of region (midpoint among a plurality of point), so that the focus is calculated.

According to the method for controlling an image reading apparatus of the present invention, the reading is hardly affected by noise, because the focus position is calculated based on the midpoint among a plurality of point after the shading compensation process and the gamma correction process are performed. Therefore, if, for example, a relatively larger noise component may be produced for a document of low contrast, the present method can prevent the calculated focus position from deviating greatly, and if any dust or contamination adherent to a transparency-film document may produce a large noise, the present method can prevent improper focusing on the dust. Thus, any focus detection failure can be avoided and a high resolution can be obtained.

Another method for controlling an image reading apparatus of the present invention is a method which includes performing an auto focus process to adjust focus on a surface of a medium, and performing a reading process to read an image on the medium at the focus adjusted by the auto focus process. And, the auto focus process further includes performing a shading compensation process on image data read from the medium, using a lamp which has flat output characteristics in the main scanning direction as a light source, and the reading process further includes performing a compensation process on image data read from the medium again, using shading data resulting from the shading compensation process performed in the auto focus process.

According to the method for controlling an image reading apparatus of the present invention, the shading data is not affected by any change in focus position (that is, magnification), because a lamp which exhibits flat output characteristics in the main scanning direction is used as a light source. Therefore, the shading compensation process performed during the auto focus process can provide an accurate focus and the shading data resulting from that shading compensation process can be also used for the shading compensation process performed during the reading process. Thus, any focus detection failure during the auto focus process can be avoided, a high resolution can be obtained, and the reading process can be performed at higher speeds.

Still another method for controlling an image reading apparatus of the present invention is a method which includes performing an auto focus process to adjust focus on a surface of a medium, and performing a reading process to read an image on the medium at the focus adjusted by the auto focus process. And, the auto focus process further includes performing a gamma correction process on image data read from the medium, using a first gamma table stored in a first gamma buffer, and the reading process further includes performing a gamma correction process on the image data read from the medium again, using a second gamma table stored in a second gamma buffer.

According to the method for controlling an image reading apparatus of the present invention, the plurality of gamma buffer can allow a gamma correction process to be performed during the auto focus process and another gamma correction process to be performed during the reading process without rewriting the gamma tables. Therefore, the auto focus process can provide an accurate focus and the reading process can provide correct image data at higher speeds. Thus, any focus detection failure can be avoided, a high resolution can be obtained, and the reading process can be performed at higher speeds.

### Brief Description of the Drawings

FIG. 1 is a block diagram for showing the structure of an image reading apparatus.
FIG. 2 is an explanatory drawing for showing an image reading process, and especially FIG. 2A schematically shows a reading unit and FIG. 2B schematically shows a reading process.
FIG. 3 is an explanatory drawing for showing the image reading process, and especially FIGS. 3A and 3B show output characteristics exhibited by a lamp in its main scanning direction during the present and prior reading processes, respectively.
FIG. 4 is an explanatory drawing for showing the image reading process, and especially FIGS. 4A and 4B show MTF values of image data with and without a shading compensation processing performed thereon during the auto focus process, respectively.
FIG. 5 is an explanatory drawing for showing the image reading process, and especially FIGS. 5A and 5B show MTF values of image data with and without a gamma correction processing performed thereon during the auto focus process, respectively.
FIG. 6 is an explanatory drawing for showing the image reading process.
FIG. 7 is an explanatory drawing for showing the image reading process.
FIG. 8 shows a reading process flow.
FIG. 9 shows a reading process flow.
FIG. 10 shows a reading process flow.
FIG. 11 is an explanatory drawing for showing another image reading process.
FIG. 12 is an explanatory drawing for showing the image reading process, and especially FIGS. 12A through 12C show how a temporal focus is calculated when image data is divided into a plurality of region in the main scanning direction.

### Best Mode for Carrying Out the Invention

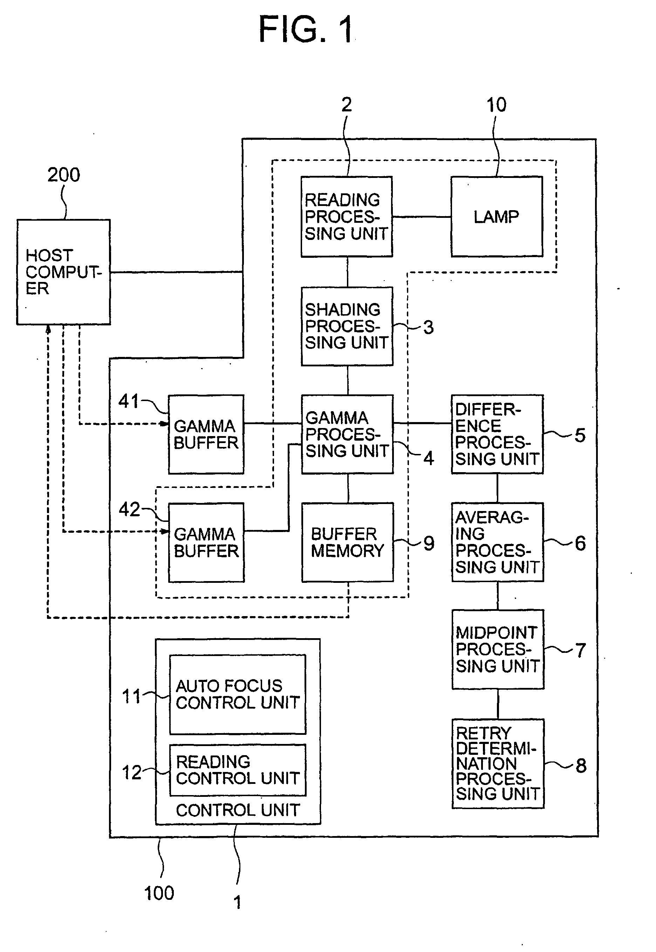

FIG. 1 is a block diagram for showing the structure of an image reading apparatus and shows the structure of an image reading apparatus of the present invention which has an auto focus function.

An image reading apparatus 100 is connected to a host computer 200 and transfers image data read by itself to the host computer 200. The image reading apparatus 100 comprises a control unit 1, a reading processing unit 2, a shading processing unit 3, a gamma processing unit 4, a difference processing unit 5, an averaging processing unit 6, a midpoint processing unit 7, a retry determination processing unit 8, a buffer memory 9, and a lamp 10.

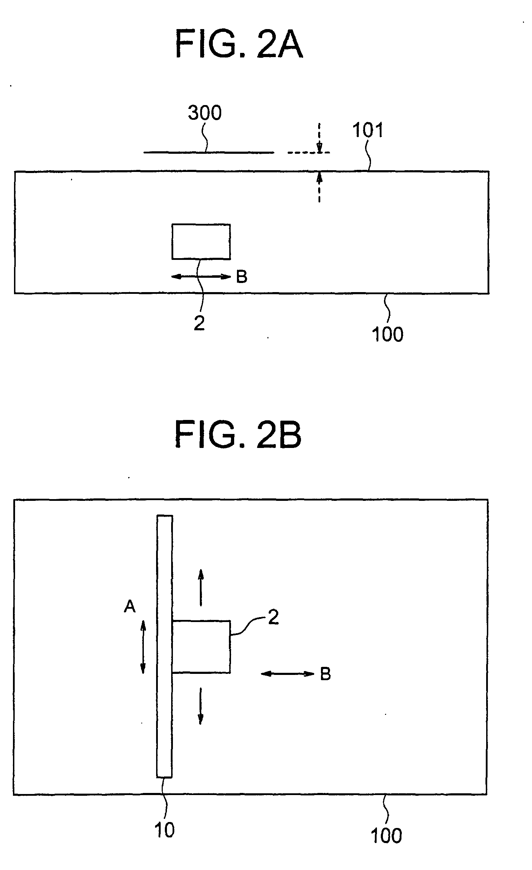

The control unit 1 controls the image reading apparatus 100, that is, the various processing units 2 through 8 such as the reading processing unit 2. More specifically, the auto focus control unit 11 causes the auto focus process to be performed prior to the reading process. The reading control unit 12 performs the reading process for reading image on a medium 300 (see FIG. 2), and transfers the image data stored in the buffer memory 9 by the reading process to the host computer 200. The medium 300 may be, for example, a cut-sheet or transparency-film document. The lamp 10 may be , for example, a light source for reflection-type document or transparency-film document. In addition, the lamp 10 may be considered as part of the reading processing unit 2.

The auto focus control unit 11 causes the processing units 2 through 8 to perform their respective processings in a predetermined order by a predetermined control signal, forms a predetermined control signal based on the result of these processings, and then performs the processing in which the focus of a reading unit (not shown) in the reading processing unit 2 is adjusted on the surface of the medium 300 placed on a document table 101 (see FIG. 2). The reading control unit 12 causes the processing units 2 through 4 to perform their respective processings in a predetermined order by a predetermined control signal, and then performs the processing in which the image on the medium 300 is read at the focus adjusted by the auto focus process and then stored in the buffer memory 9. In other words, the processing units 2 through 4 (and the lamp 10) are used for both the auto focus process and the reading process as shown by dotted lines in FIG. 1.

The reading processing unit 2 comprises a well-known reading unit (or an optical unit) including a charge-coupled device (CCD), a lens, and a mirror, as well as an auto focus unit, and both units are not shown. The reading unit reads an image on the medium 300 according to a control signal from the reading control unit 12, and outputs the image data. The auto focus unit adjusts the focus of the reading unit according to a control signal from the auto focus control unit 11. The reading processing unit 2 uses the same lamp 10 as a light source for both the auto focus process and the reading process.

As shown in FIG. 2A, during (or before) the auto focus process, the focus of the reading unit in the reading processing unit 2 is adjusted on the surface of the document table (or a platen glass) 101 on which the medium 300 is placed (or the surface on which the medium 300 is placed). Alternatively, the focus is located at position that was adjusted during a previous reading process. On the contrary, during the reading process, the focus is adjusted with high accuracy on the surface of the medium 300 to be read, with the auto focus process of the present invention. Thus, the focus can be accurately adjusted on the surface of the medium 300 to provide image data with a high resolution, even if the surface of the medium 300 is somewhat floating over the document table 101. In FIG. 2A, the direction indicated by the arrow B is a sub scanning direction.

The shading processing unit 3 performs a well-known shading compensation processing on the image data read by the reading processing unit 2 in order to compensate for image distortion which is dependent on the characteristics of the lamp 10. In addition to the shading compensated image data, the shading compensation processing provides data (shading data) to be used for a shading compensation processing. The shading data is stored in a predetermined memory (not shown) until the following reading process. The shading compensated image data is transferred to the gamma processing unit 4. According to the present invention, the shading compensation processing is performed not only during the reading process but during the auto focus process.

During the auto focus process, the shading processing unit 3 performs a shading compensation processing on the image data read from the medium 300 by the reading processing unit 2. This process provides the shading compensated image data and the shading data. During the reading process, the shading processing unit 3 performs a compensation processing on the image data read from the medium 300 again, using the shading data provided by the auto focus process.

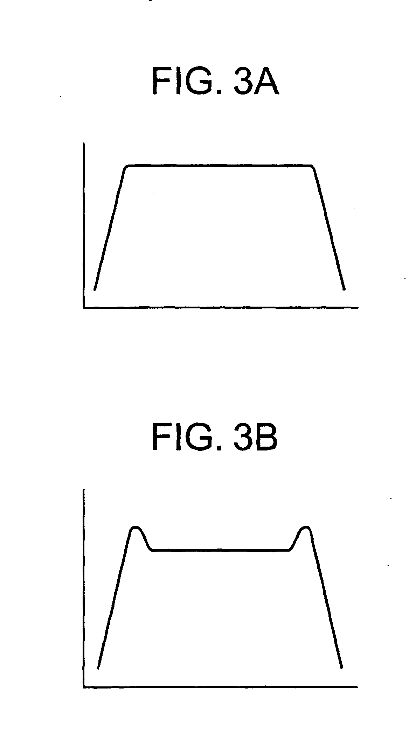

As described above, the same lamp 10 is used as a light source for both the auto focus process and the reading process. As shown in FIG. 2B, the lamp 10 is provided substantially throughout the reading width in the main scanning direction. The output characteristics of the lamp 10 is flat in the main scanning direction as shown in FIG. 3A. This allows the shading data provided by the auto focus process to be used for a shading compensation processing performed on the image data during the reading process. In other words, even if the reading region varies due to any change in focus (that is, magnification) made by the auto focus process, such variation has no influence because the (same) lamp 10 has the flat characteristics both before and after the focus change. Therefore, the shading data provided before the focus change can be used to perform a shading compensation processing on the image data provided after the focus change. In FIG. 2B, the arrow A indicates the main scanning direction.

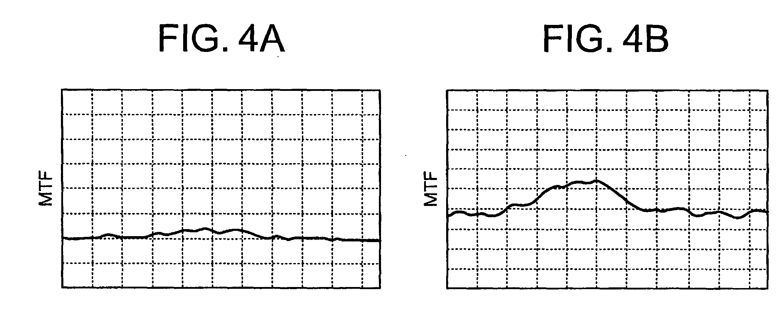

FIG. 4A shows modulation transfer function (MTF) values of image data with a shading compensation processing performed thereon during the auto focus process. The MTF may be considered as a parameter for indicating the resolving power of a lens. In FIG. 4A, the horizontal axis indicates locations in the main scanning direction, that is, locations (or amounts of travel) of a lens, and the vertical axis indicates MTF values (ditto for the subsequent drawings). FIG. 4B shows modulation transfer function (MTF) values of image data without a shading compensation processing performed thereon during the auto focus process. As seen from a comparison therebetween, it is difficult to detect the focus in the case of FIG. 4B because edge components are collapsed in the absence of shading compensation, while it is easier to detect the focus in the case of FIG. 4A than that of FIG. 4B because of the presence of edge components.

The reading processing unit 2 in this example is provided in such a manner that it can move in the main scanning direction as shown in FIG. 2B. Thus, the reading processing unit 2 has driving means (not shown) such as a motor and a belt. Therefore, in a high-resolution reading processing, even if the reading region is limited to part thereof in the main scanning direction, the reading processing unit 2 can move in the main scanning direction and can read an image throughout the reading region in the main scanning direction at a high resolution.

In a prior system, no shading compensation processing is performed during the auto focus process. In addition, any shading data provided by the auto focus process is not used to perform a shading compensation processing on image data during the reading process in the prior system. Moreover, output characteristics of the lamp 10 in the prior system is non-flat in the main scanning direction as shown in FIG. 3B. Therefore, the prior system cannot use the shading data provided by the auto focus process for the reading process after any focus change is made.

The gamma processing unit 4 performs a well-known gamma (Γ) correction processing on the image data which is read from the medium 300 and shading-compensated, in order to make any edge component distinctive in a medium 300 which has a little difference between light and shade. For this purpose, the gamma processing unit 4 has first and second gamma buffers (memories) 41 and 42 to store tables (gamma tables) on which constants for gamma correction are described. First and second gamma tables are transferred from the host computer 200, respectively.

During the auto focus process, the gamma processing unit 4 perform a gamma correction processing by using a gamma table (a first gamma table) stored in the first gamma buffer 41, and then transmits gamma-corrected image data to the differenceprocessingunit 5 (and the buffer memory 9). During the reading process, the gamma processing unit 4 perform a gamma correction processing by using another gamma table (a second gamma table) stored in the second gamma buffer 42, and then transmits gamma-corrected image data to the buffer memory 9.

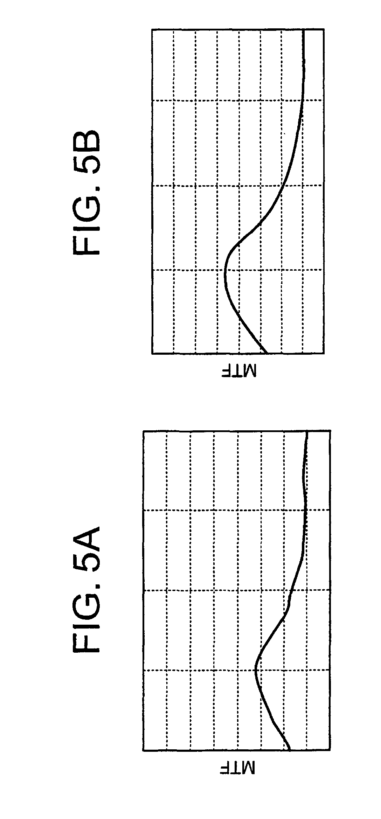

FIG. 5A shows MTF values of image data with a gamma correction processing performed thereon during the auto focus process. FIG. 5B shows MTF values of image data without a gamma correction processing performed thereon during the auto focus process. As seen from a comparison therebetween, it is difficult to detect the focus in the case of FIG. 5B because edge components are collapsed in the absence of gamma correction, while it is easier to detect the focus in the case of FIG. 5A than that of FIG. 5B because of the presence of edge components.

In a prior system, no gamma correction processing is performed during the auto focus process. In addition, the gamma processing unit 4 in the prior system has only one gamma buffer. Therefore, if the prior system of such structure perform a gamma correction processing during the auto focus process, a gamma table should be rewritten into a gamma table for the reading process after the gamma table for the auto focus process was stored and used.

The difference processing unit 5 performs an processing on the gamma-corrected image data to obtain differences (difference data) between adjacent regions of data. More specifically, for each pixel (picture element) in the image data, a difference from its adjacent pixel is calculated. For example, assuming that a pixel of the image data has a value Xₙ and the next pixel of the image data has a value X₍ₙ₊₁₎, the difference data can be represented as (X₍ₙ₊₁₎-Xₙ).

The averaging processing unit 6 calculates an average of the difference data (to obtain averaged difference data), and then performs a moving average processing on the averaged difference data (to obtain moving average data). For example, an average of n successive difference data (for example, n=7) is calculated as its averaged difference data. This can average a waveform for noise removal. In addition, assuming that averaged difference data is a data sequence, a weighted average according to the distance between each data in gathering of n data (for example, n=7) is calculated as its moving average data. This makes it possible to calculate a focus position at the midpoint rather than at the peak or maximum (MAX point) of MTF values of the image data, so that noise removal can be attained.

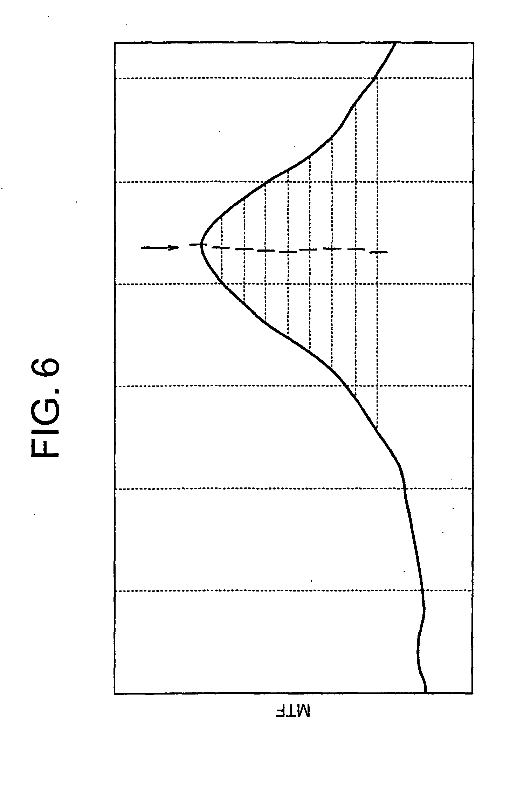

The midpoint processing unit 7 slices MTF values of characteristic data (the moving average data) provided by the averaging processing in the averaging processing unit 6 as shown in FIG. 6. More specifically, the characteristic data is equally divided into a plurality of data region (for example, twelve regions) with a uniform width between the maximum and the minimum (MIN point) of those MTF values. The minimum is determined on the basis of contrast of each read document at each reading. Therefore, the slice width will depend on each document. The MTF values are represented as a waveform with a high and sharp peak, when the document contains a dense image. The midpoint processing unit 7 determines the midpoint in each sliced region and calculates an average of these midpoints (an average among a plurality of midpoint), which is provided as a focus position (lens location corresponding thereto). Each midpoint is determined, for example, from an average of both end values on the lower (or upper) edge of each sliced region.

Although not shown specifically, without slicing characteristic data (moving average data), for example, if a midpoint at middle position between the maximum and the minimum of the MTF values is used as the midpoint to provide a focus position (lens location corresponding thereto), it is susceptible to dust or other noise factors.

The retry determination processing unit 8 determines whether the focus position calculated by the midpoint processing unit 7 meets a predetermined condition. When it meets the predetermined condition, the retry determination processing unit 8 notifies the control unit 1 of it. This can allow the control unit 1 to determine that the calculated focus is not proper and to perform the auto focus process again.

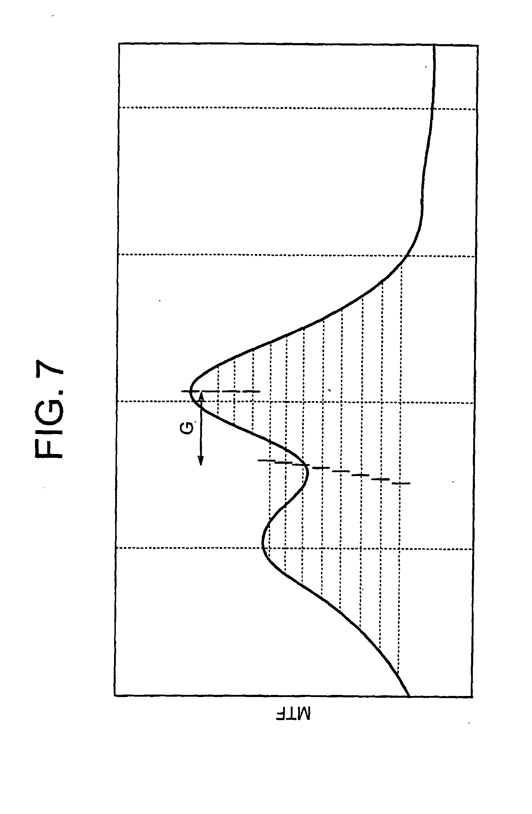

The retry condition includes some situations as shown in FIG. 7. For example, one of these situations is that a calculated focus position A is shifted from a location B which is the peak (MAX) of characteristic data by more than a predetermined value. Another situation is that any two midpoints A and C of midpoints of the sliced regions of characteristic data are separated from each other by more than a predetermined value. The predetermined value is, for example, a distance of approximately 0.1 mm in the main scanning direction. This corresponds to eight pulses (+/- four pulses) which constitute a control (or driving) signal supplied to a pulse motor (not shown) for driving the reading unit in the reading processing unit 2, when the reading unit moves in the main scanning direction (see FIG. 2B).

A prior system slices characteristic data into a plurality of region to determine the midpoint in each region and then merely calculates an average among a plurality of midpoint as a focus. And thus, the prior system cannot perform a retry processing when there exists a large deviation G as shown in FIG. 7. Therefore, even if a calculated focus position A is shifted from a location B which is the peak (MAX) of the characteristic data by more than a predetermined value, the prior system cannot correct the focus and is susceptible to dust or other noise factors, so that a high resolution cannot be provided.

FIGS. 6 and 7 show MTF values of image data when an average among a plurality of midpoint is calculated as a focus during the auto focus process, as described above. As seen from FIGS. 6 and 7, calculation on a single slice causes a deviation in focus position but averaging a plurality of slice can provide a high resolution with little deviation, and in addition, a retry processing can allow for proper focus calculation when the calculated focus is not proper as shown in FIG. 7.

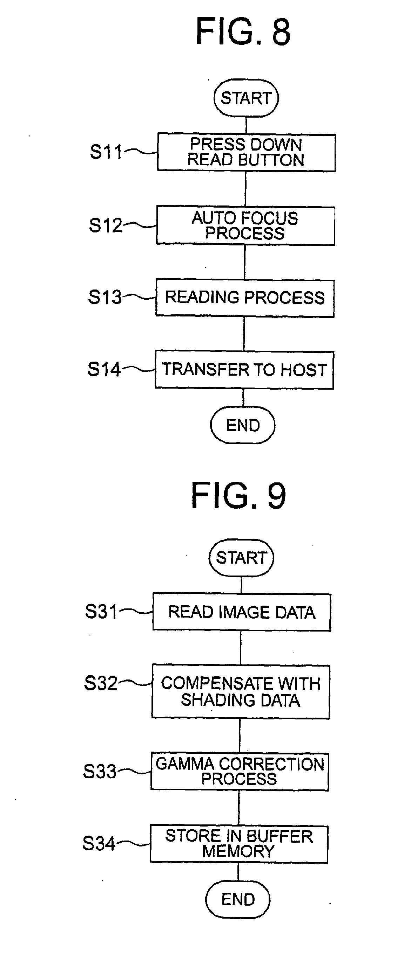

FIG. 8 is a reading process flowchart for schematically showing an image reading process performed by the image reading apparatus 100 according to the present invention.

When an image-bearing medium 300 is placed on the document table 101 of the image reading apparatus 100 and a read button (not shown) is pressed down (step S11), in response thereto, the control unit 1 first causes the auto focus control unit 11 to perform the auto focus process (step S12), after that causes the reading control unit 12 to perform the reading process (step S13), then transfers the read image data to the host computer 200 (step S14).

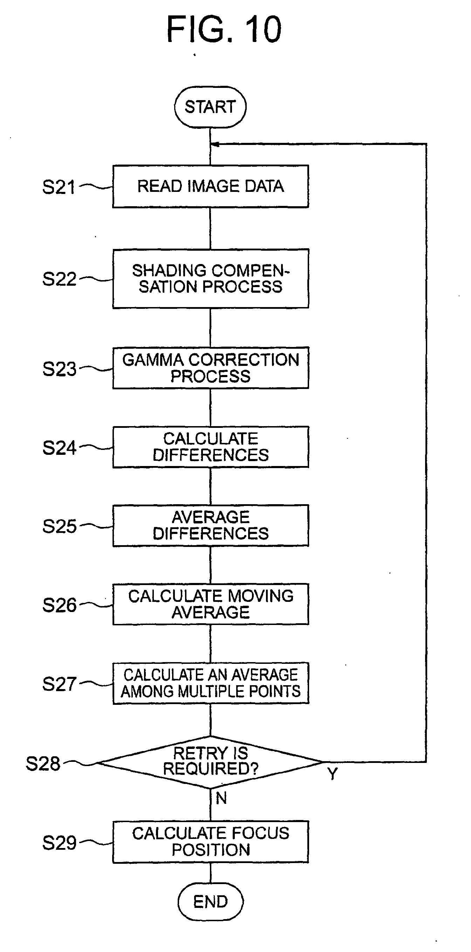

FIG. 10 is a reading process flowchart for showing the auto focus process performed under the control of the auto focus control unit 11 in step S12 of FIG. 8.

When the reading processing unit 2 reads out the image data (step S21), the shading processing unit 3 performs a shading compensation processing on the read image data to compensate the read image data, and to obtain and store shading data (step S22). The gamma processing unit 4 uses the first gamma table in the first gamma buffer 41 to perform a gamma correction processing on the shading-compensated image data (step S23). Then, the difference processing unit 5 obtains differences between adjacent regions of the gamma-corrected image data (step S24), and the averaging processing unit 6 averages the obtained differences of the image data (difference data) to provide the averaged difference data ( step S25). The averaging processing unit 6 further performs a moving average processing on the averaged difference data to provide the moving average data (step S26). Using a characteristic drawing for MTF values based on the moving average data, the midpoint processing unit 7 calculates a value (a temporal focus) which is an average among a plurality of midpoint (seven midpoints) between every two values (step S27). And then, the retry determination processing unit 8 determines whether the auto focus process must be retried for the temporal focus (step S28). When a retry is required, step S21 and the subsequent steps are repeated. If no retry is required, the temporal focus is provided as a calculated focus position (step S29).

FIG. 9 is a reading process flowchart for showing the reading process performed under the control of the reading control unit 12 in step S13 of FIG. 8.

When the reading processing unit 2 reads out the image data (step S31), the shading processing unit 3 compensates the read image data, using the shading data previously stored in step S22 (step S32). And, the gamma processing unit 4 performs a gamma correction processing on the compensated image data, using the second gamma table in the second gamma buffer 42 (step S33) and temporarily stores its output in the buffer memory 9 (step S34). The image data stored in the buffer memory 9 is sequentially transferred by the reading control unit 12 to the host computer 200.

Although the present invention has been described above with respect to the preferred embodiment, many variations thereof may be made within the spirit and scope of the present invention.

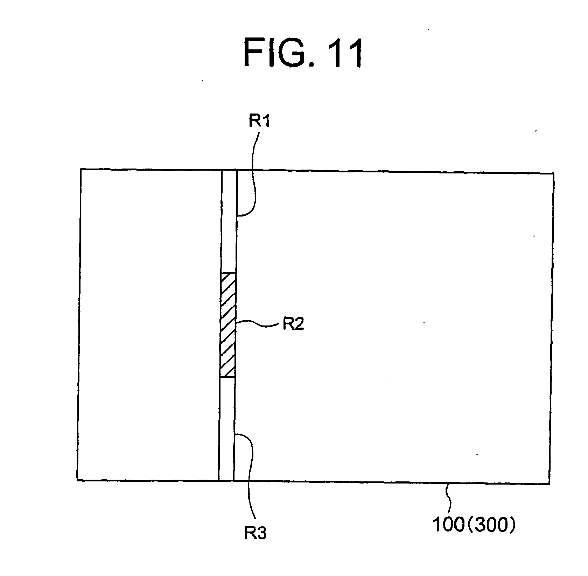

For example, as shown in FIG. 11, during the auto focus process, the image data read from the medium 300 (reading regions R1, R2, R3) may be divided into a plurality of region (for example, three regions) in the main scanning direction, and then the above-described processings are performed on each region to obtain a focus. As described above, the reading processing unit 2 is provided in such a manner that it can move in the main scanning direction as shown in FIG. 2B.

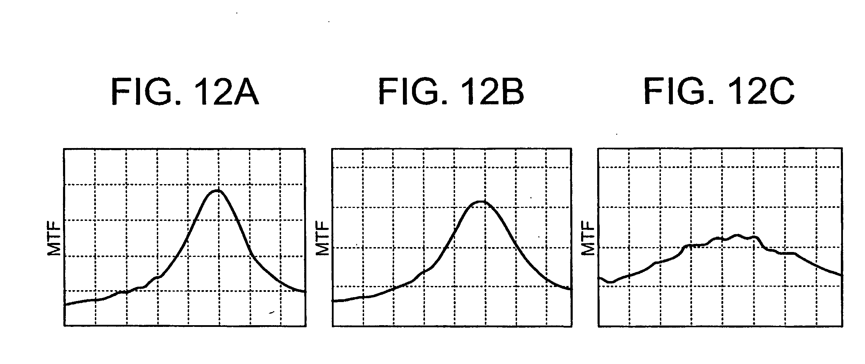

For example, when the image data is divided into three regions in the main scanning direction, as shown in FIG. 12, three pieces of characteristic data and three temporal focuses based thereon are provided up to step S27. Then, the midpoint processing unit 7 averages the three temporal focuses, so that a temporal focus for the retry determination is obtained. Alternatively, one of the three temporal focuses that has the largest MTF value (a temporal focus obtained from FIG. 12A) is determined as a temporal focus for the retry determination. This can provide a proper focus.

Alternatively, for example, the retry determination processing unit 8 may determine whether the auto focus process must be retried for each of the above three temporal focuses. When the retry determination processing unit 8 determines that a retry is required for any one of them (temporal focuses obtained from FIG. 12C), step S21 and the subsequent steps are repeated (retried) for all of the three regions divided in the main scanning direction. Alternatively, the retry may be made when such a retry is required for the majority of the three temporal focuses (that is, two of them). In this example, no retry is required for two temporal focuses obtained from FIGS. 12A and 12B. Still alternatively, the retry may be made when any (one or the majority) of the three temporal focuses has an MTF value less than a predetermined value. Alternatively, the retry may be made only for one or more regions associated with any of the three temporal focuses which may require such retry.

### Industrial Applicability

As described above, the method for controlling an image reading apparatus according to the present invention may be hardly affected by noise, because the focus position is calculated based on the midpoint among a plurality of point after the shading compensation processing and the gamma correction processing are performed. Therefore, if, for example, a relatively larger noise component may be produced for a document of low contrast, the present method can prevent the calculated focus position from deviating greatly, and if any dust or contamination adherent to a transparency-film document may produce a large noise, the present method can prevent improper focusing on the dust. Thus, any focus detection failure can be avoided and a high resolution can be obtained.

With the method for controlling an image reading apparatus according to the present invention, the shading data may not be affected by any change in focus position, because a lamp which exhibits flat output characteristics in the main scanning direction is used as a light source. Therefore, the shading compensation processing performed during the auto focus process can provide an accurate focus and the shading data resulting from that shading compensation processing can be also used for the shading compensation processing performed during the reading process. Thus, any focus detection failure during the auto focus process can be avoided, a high resolution can be obtained, and the reading process can be performed at higher speeds.

With the method for controlling an image reading apparatus according to the present invention, the plurality of gamma buffer can allow a gamma correction processing to be performed during the auto focus process and another gamma correction processing to be performed during the reading process without rewriting the gamma tables. Therefore, the auto focus process can provide an accurate focus and the reading process can provide correct image data at higher speeds. Thus, any focus detection failure can be avoided, a high resolution can be obtained, and the reading process can be performed at higher speeds.

## Claims

1. A method for controlling an image reading apparatus, the method comprising:
performing an auto focus process to adjust a focus on a surface of a medium; and
performing a reading process to read an image on the medium at the focus adjusted by the auto focus process,
wherein the auto focus process further comprises:
performing a shading compensation process on image data read from the medium;
performing a gamma correction process on the shading-compensated image data;
calculating differences between adjacent picture elements in the gamma-corrected image data;
averaging the differences; and
obtaining characteristic data from the averaging process is sliced into a plurality of region and determining the midpoint in each of the plurality of region, so that the focus is calculated.

2. A method for controlling an image reading apparatus according to claim 1, wherein the differences are averaged by calculating an average of the difference data which are differences between the adjacent picture elements to obtain averaged difference data and then performing a moving average process on the averaged difference data.

3. A method for controlling an image reading apparatus according to claim 1, wherein the focus is obtained by slicing the characteristic data into a plurality of region to determine the midpoint in each of the plurality of region and calculating an average of the midpoints.

4. A method for controlling an image reading apparatus according to claim 1, wherein, in the auto focus process, the image data read from the medium is divided into a plurality of region and the focus for each of the plurality of region are calculated.

5. A method for controlling an image reading apparatus according to claim 4, wherein the auto focus process is performed again when the location of at least one or more of the calculated focuses for the plurality of region meet a predetermined condition.

6. A method for controlling an image reading apparatus according to claim 4, wherein the focus is obtained by dividing the image data read from the medium into a plurality of region, calculating a focus for each of plurality of the region and averaging the calculated focuses.

7. A method for controlling an image reading apparatus according to claim 6, wherein the auto focus process is performed again when the location of the calculated focuses meet a predetermined condition.

8. A method for controlling an image reading apparatus according to claim 1, wherein the auto focus process is performed again when the location of the calculated focus meets a predetermined condition.

9. A method for controlling an image reading apparatus according to claim 8, wherein the condition is a situation that position of the calculated focus is shifted from the peak of the characteristic data by more than a predetermined value.

10. A method for controlling an image reading apparatus according to claim 8, wherein the condition is a situation that the midpoints obtained for the sliced regions of the characteristic data are separated from each other by more than a predetermined value.

11. A method for controlling an image reading apparatus, the method comprising:
performing an auto focus process to adjust focus on a surface of a medium; and
performing a reading process to read an image on the medium at the focus adjusted by the auto focus process,
wherein the auto focus process further comprises:
performing a shading compensation process on image data read from the medium, using a lamp which has flat output characteristics in the main scanning direction as a light source, and
wherein the reading process further comprises:
performing a compensation process on image data read from the medium again, using shading data resulting from the shading compensation process performed in the auto focus process.

12. A method for controlling an image reading apparatus according to claim 11, wherein the image on the medium is read in the reading process, using the lamp used for the shading compensation process in the auto focus process.

13. A method for controlling an image reading apparatus according to claim 11, wherein the auto focus process further comprises:
performing a gamma correction process on the shading-compensated image data;
calculating differences between adjacent picture elements in the gamma-corrected image data;
averaging the differences; and
obtaining characteristic data from the averaging process is sliced into a plurality of region and determining the midpoint in each of the plurality of region, so that the focus is calculated.

14. A method for controlling an image reading apparatus, the method comprising:
performing an auto focus process to adjust focus on a surface of a medium; and
performing a reading process to read an image on the medium at the focus adjusted by the auto focus process,
wherein the auto focus process further comprises:
performing a gamma correction process on image data read from the medium, using a first gamma table stored in a first gamma buffer; and
wherein the reading process further comprises:
performing a gamma correction process on the image data read from the medium again, using a second gamma table stored in a second gamma buffer.

15. A method for controlling an image reading apparatus according to claim 14, wherein the first and second gamma tables are transferred from a host computer.
